# EUROPÄISCHE PATENTSCHRIFT

(11) **EP 3 631 180 B1**
(45) Veröffentlichungstag und Bekanntmachung des Hinweises auf die Patenterteilung: **21.04.2021**
(21) Anmeldenummer: 18726980.8
(22) Anmeldetag: 23.05.2018
(51) Int. Cl.: G01F 23/00, G01N 22/00, H01B 11/00, H01P 5/103, H01Q 1/22, H01Q 13/00, H01Q 23/00, F01N 13/00, F01N 3/021, F01N 3/10

(54) **ABGASLEITUNGSANORDNUNG FÜR EINE BRENNKRAFTMASCHINE**
EXHAUST PIPE ARRANGEMENT FOR A COMBUSTION ENGINE
ARRANGEMENT DE CONDUIT D'ÉCHAPPEMENT POUR UN MOTEUR À COMBUSTION INTERNE

(30) Priorität: 30.05.2017 DE 102017209050
(43) Veröffentlichungstag der Anmeldung: 08.04.2020
(73) Patentinhaber: Vitesco Technologies GmbH, 30165 Hannover (DE)
(72) Erfinder: WEINBERGER, Martin, 81373 München (DE); REITMEIER, Willibald, 93155 Hemau (DE); BURGER, Katharina, 93055 Regensburg (DE); HIEN, Markus, 92436 Bruck (DE)
(86) Internationale Anmeldenummer: PCT/EP2018/063490
(87) Internationale Veröffentlichungsnummer: WO 2018/219734

(56) Entgegenhaltungen:
- DE-A1-102015 001 228
- JP-A- H04 103 813
- JP-A- 2010 223 169
- US-A- 4 580 441

## Beschreibung

Die vorliegende Erfindung betrifft eine Abgasanleitung für eine Brennkraftmaschine, insbesondere eine Abgasleitung für eine Brennkraftmaschine, in die elektromagnetische Wellen zur Untersuchung einer in der Abgasanlage angeordneten Abgasnachbehandlungsvorrichtung eingekoppelt werden können.

Immer strengere Abgasgesetze in Verbindung mit dem Bestreben zum Reduzieren des Kraftstoffverbrauches erfordern neue Konzepte sowohl für die Brennkraftmaschine als auch für die Abgasnachbehandlung. Damit verbunden sind auch neue Konzepte für die Steuerung und Überwachung von Abgasnachbehandlungsanlagen. Bei einer stöchiometrisch betriebenen Brennkraftmaschine wird das Luft-Kraftstoffverhältnis des Abgases mithilfe einer Lambdasonde detektiert. Bei einer Regelabweichung vom Sollwert (Lambda = 1) wird das Luft-Kraftstoffverhältnis nachgeregelt. In der Praxis erhält man somit einen Betrieb der Brennkraftmaschine in einem Bereich um den Sollwert herum.

Als Abgasnachbehandlungsanlagen sind beispielsweise Katalysatoren, wie beispielsweise SCR-Katalysatoren, und Partikelfilter, wie beispielsweise Dieselpartikelfilter, zu nennen. Dieselpartikelfilter sind dazu ausgebildet, die im Abgas befindlichen Partikel oder Ruß aus dem Abgas einzufangen, damit diese nicht in die Umgebung ausgelassen werden. Bei einer bestimmten Beladung des Partikelfilters müssen die angesammelten Partikel verbrannt werden, um die Speicherkapazität des Partikelfilters wieder zu erhöhen.

Die Messung des Beladungszustands des Partikelfilters ist oftmals sehr aufwendig und zumeist sehr ungenau. Dadurch kann es zu häufigen Regenerationen des Partikelfilters kommen, die jedoch aufgrund eines niedrigen Beladungszustandes unnötig sind.

Aus der DE 10 2008 012 050 A1 ist bekannt, den kontinuierlichen zeitlichen Verlauf einer Katalysatorbeladung bzw.- entladung berührungslos mithilfe einer Mikrowellenanordnung zu erfassen und den Katalysatorzustand als Eingangsgröße für die Motorregelung verfügbar zu machen. Dazu werden stromaufwärts und/oder stromabwärts der Filterkeramik Mikrowellenantennen derart angebracht, dass diese in den Abgasstrom hineinragen.

Weitere Systeme und Vorrichtung sind aus der DE 10 2010 019 309, DE 10 2010 034 983 A1, DE 694 01 133 D2, JP 2009-36199 A1, US 2017/0120179 A1, DE 11 14 866 A, FR 2 432 775 A1, US 4 580 441 A, DE 10 2015 001 228 A1, JP H04 103 813 A, JP 2010 223 169 A und DD 16 878 A1 bekannt.

In den bekannten System ragen die Antennen zumindest teilweise in den Abgasstrom hinein und sind somit dem Abgasstrom direkt ausgesetzt, was dazu führen kann, dass sich etwaige Partikel im Abgas an den Antennen ansammeln und ablagern können. Diese abgelagerten Partikel an den Antennen können unter Umständen zu einem schlechteren und/oder ineffizienten Betrieb der Antennen führen.

Der vorliegenden Erfindung liegt zumindest teilweise die Aufgabe zugrunde, eine Abgasleitung vorzusehen, in der sich eine Abgasnachbehandlungsvorrichtung befindet, die zuverlässig mittels eingekoppelten elektromagnetischen Wellen überwacht werden kann.

Diese Aufgabe kann mit einer Abgasleitungsanordnung gemäß Anspruch 1 gelöst werden. Vorteilhafte und bevorzugte Ausgestaltungen sind in den Unteransprüchen angegeben.

Der vorliegenden Erfindung liegt im Wesentlichen der Gedanke zugrunde, elektromagnetische Wellen mithilfe eines Koppelelements in die Abgasleitung und somit in die Abgasnachbehandlungsanlage einzukoppeln. Ein von außen an die Abgasleitung angebrachtes Abschirmgehäuse bildet einen Hohlraumresonator, in den mittels des Wellenleiters die elektromagnetischen Wellen eingekoppelt werden, die durch eine Öffnung in der Abgasleitung in die Abgasnachbehandlungsanlage propagieren können. Somit kann durch das vorsehen des Abschirmgehäuses und des Wellenleiters außerhalb der Abgasleitung zumindest teilweise verhindert werden, dass das Abschirmgehäuse und/oder der Wellenleiter dem Abgas direkt ausgesetzt sind und somit von den Partikeln kontaminiert werden.

Erfindungsgemäß ist eine Abgasleitungsanordnung für eine Brennkraftmaschine offenbart, die eine sich im Wesentlichen entlang einer Längsachse erstreckende Abgasleitung, die dazu ausgebildet ist, Abgas der Brennkraftmaschine zumindest teilweise zu leiten, eine in der Abgasleitung vorgesehene Öffnung, die im Wesentlichen radial zur Längsachse angeordnet ist, ein Abschirmgehäuse, das mit der Abgasleitung als eine sich bezüglich der Längsachse im Wesentlichen radial nach außen erstreckende Ausformung bzw. Auswölbung integral derart gebildet ist, dass es die Öffnung im Wesentlichen vollständig umgibt, und einen Wellenleiter aufweist, der mit dem Abschirmgehäuse und/oder mit der Abgasleitung gekoppelt und dazu ausgebildet ist, elektromagnetische Wellen derart in das Abschirmgehäuse einzukoppeln, dass die elektromagnetischen Wellen durch die Öffnung in die Abgasleitung propagiert werden.

Das von außen an der Abgasleitung angebrachte Abschirmgehäuse bildet, wie bereits erwähnt, im Inneren desselben einen Hohlraumresonator, in dem sich durch Resonanz eine stehende Welle, meist mit verschiedenen Moden, bilden kann. Dazu werden mittels des Wellenleiters elektromagnetische Wellen in das Abschirmgehäuse, und somit in den Hohlraumresonator, eingekoppelt. Die sich im Abschirmgehäuse ausbildenden elektromagnetischen Wellen können dann durch die Öffnung in der Abgasleitung in die Abgasleitung hinein und in die Abgasnachbehandlungsvorrichtung propagieren.

In einer vorteilhaften Ausgestaltung weist die Abgasleitungsanordnung ferner eine in der Abgasleitung angeordnete Abgasnachbehandlungsvorrichtung auf, die dazu ausgebildet ist, das durch die Abgasleitung strömende Abgas zumindest teilweise nachzubehandeln. In einer solchen vorteilhaften Ausgestaltung ist die Öffnung im Bereich der Abgasnachbehandlungsvorrichtung derart vorgesehen, dass die vom Wellenleiter in das Abschirmgehäuse eingekoppelten elektromagnetischen Wellen durch die Öffnung in die Abgasnachbehandlungsvorrichtung propagiert werden können.

Vorzugsweise ist die Öffnung eine schlitzförmige Öffnung, die sich im Wesentlichen parallel zur Längsachse oder bezüglich der Längsachse in Umfangsrichtung erstreckt. Die schlitzförmige Öffnung kann beispielsweise durch Stanzen, Prägen oder Schneiden in die Mantelwand der Abgasleitung, die vorzugsweise rohrförmig ist, eingebracht werden.

In einer derartigen Ausgestaltung ist es bevorzugt, dass die schlitzförmige Öffnung eine Länge aufweist, die ungefähr der Hälfte der relevanten Wellenlänge der eingekoppelten elektromagnetischen Wellen entspricht. Damit kann bewerkstelligt werden, dass auch das Abschirmgehäuse eine sich in Erstreckungsrichtung der schlitzförmigen Öffnung erstreckende Ausdehnung aufweist, die ungefähr der Hälfte der relevanten Wellenlänge entspricht. Somit haben die eingekoppelten elektromagnetischen Wellen ausreichenden Raum zur Verfügung, um sich im Abschirmgehäuse auszubilden, die dann durch die schlitzförmige Öffnung in die Abgasleitung und somit in die Abgasnachbehandlungsvorrichtung propagiert werden können.

Gemäß einer weiteren vorteilhaften Ausgestaltung der erfindungsgemäßen Abgasleitungsanordnung weist das Abschirmgehäuse eine bezüglich der Längsachse radiale Ausdehnung auf, die ungefähr einem Viertel der relevanten Wellenlänge entspricht. Genauer gesagt steht in einer solchen Ausgestaltung das Abschirmgehäuse von der Mantelwand der Abgasleitung bezüglich der Längsachse in radialer Richtung nach außen mit der genannten radialen Ausdehnung ab. Durch das Einstellen der genannten Ausdehnung von ungefähr einem Viertel der relevanten Wellenlänge kann zumindest teilweise gewährleistet werden, dass sich in dem im Abschirmgehäuse vorgesehenen Hohlraumresonator stehende Wellen ausbildet, die durch die Öffnung in die Abgasleitung und somit in die Abgasnachbehandlungsvorrichtung propagieren können.

In einer weiteren vorteilhaften Ausgestaltung weist das Abschirmgehäuse eine sich bezüglich der Längsachse in axialer Richtung erstreckende Ausdehnung auf, die ungefähr der Hälfte der relevanten Wellenlänge entspricht. Alternativ oder zusätzlich weist das Abschirmgehäuse eine sich bezüglich der Längsachse in Umfangsrichtung erstreckende Ausdehnung auf, die ungefähr einem Viertel der relevanten Wellenlänge entspricht. Ein sich teilweise um den Umfang der Abgasleitung erstreckendes Abschirmgehäuse weist im Hinblick auf den immer knapper werdenden Bauraum in Brennkraftmaschinen eine effiziente Ausnutzung des vorhanden Platzes auf.

Bevorzugt ist der Wellenleiter ein Koaxialleiter, der einen Innenleiter, der mit Abschirmgehäuse oder der Abgasleitung gekoppelt ist, und einen den Innenleiter koaxial umgebenden Außenleiter aufweist, der mit dem Abschirmgehäuse gekoppelt ist. Bei der Ausgestaltung, bei der sich das Abschirmgehäuse teilweise um den Umfang der Abgasleitung erstreckt, ist der Innenleiter mit der Abgasleitung gekoppelt. Bei der Ausgestaltung, bei der das Abschirmgehäuse die oben genannte radiale Ausdehnung bezüglich der Längsachse aufweist, ist der Innenleiter mit einer Innenwand des Abschirmgehäuses gekoppelt.

Dabei ist es bevorzugt, dass der Innenleiter mit einer Innenwand des Abschirmgehäuses in unmittelbarer Umgebung der Öffnung gekoppelt ist. Mit einer derartigen Ausgestaltung kann das Abschirmgehäuse kleinstmöglich gehalten werden, was sich positive auf den Platzbedarf und die Herstellungskosten auswirken kann.

Vorzugsweise weist das Abschirmgehäuse ein Loch auf, in das der Außenleiter zumindest teilweise eingesetzt ist und an dem der Außenleiter mit dem Abschirmgehäuse gekoppelt ist. Das Koppeln des Innenleiters und/oder Außenleiters mit dem Abschirmgehäuse und/oder der Abgasleitung kann beispielsweise mittels Schweißen, Löten, Verstemmen oder Verschrauben erfolgen.

Die in die Abgasleitung eingekoppelten elektromagnetischen Wellen weisen bevorzugt Frequenzen auf, die im Bereich von ungefähr 0,3 GHz bis ungefähr 500 GHz liegen.

Ferner kann es bevorzugt sein, das Abschirmgehäuse integral mit der Abgasleitung mittels geeigneter Ur- und Umformprozesse auszuführen.

Außerdem kann es vorteilhaft sein, in den einzelnen Elementen, wie beispielsweise die Abgasleitung, konstruktive Maßnahmen zur Versteifung dieser Elemente vorzusehen. Als konstruktive Maßnahmen sind hier beispielhaft Sicken und/oder Prägungen anzuführen.

Die Einkopplung der elektromagnetischen Wellen kann induktiv, kapazitiv oder mittels Kombination davon erfolgen. In ähnlicher Weise kann die Auskopplung der elektromagnetischen Wellen induktiv, kapazitiv oder mittels Kombinationen davon erfolgen.

Sämtliche für eine effektive Einkopplung von elektromagnetischen Wellen in die Abgasleitung bzw. Abgasnachbehandlungsvorrichtung relevanten Bauteile der erfindungsgemäßen Abgasleitungsanordnung sind vorzugsweise aus Materialien gebildet, die eine hohe Leitfähigkeit ausweisen, beispielsweise eine Leitfähigkeit, die größer ist als 50.000 S/m.

In einer weiteren vorteilhaften Ausgestaltung kann der Wellenleiter zumindest teilweise mit dem Abschirmgehäuse und/oder dem Koppelelement integral ausgebildet sein.

Ferner kann es bevorzugt sein, dass eine Einkoppeleinheit, bestehend aus dem Abschirmgehäuse, dem Koppelelement und dem Wellenleiter, als vormontierte Einheit bereitgestellt werden kann, die dazu ausgebildet ist, eine bereits bestehende Abgasleitung mit einer derartigen Einkoppeleinheit nachzurüsten. Außerdem ist somit ein Austausch einer z. B. defekten Einkoppeleinheit möglich.

Jede der hierin beschriebenen Koppelstrukturen kann beliebig mit anderen, z. B. auch bekannten, Koppelstrukturen an einer Abgasleitung kombiniert werden. Dabei können die Ausrichtungen der jeweiligen Koppelstrukturen wie gewünscht angepasst werden, damit das Reflexions- und/oder Transmissionsverhalten bestimmt werden kann.

In einer vorteilhaften Ausgestaltung ist das Koppelelement über eine beliebige Impedanz mit der Abgasleitung und/oder dem Abschirmgehäuse verbunden.

Weitere Aufgaben und Merkmale der vorliegenden Erfindung werden dem Fachmann durch Ausüben der offenbarten Lehre und Betrachten der beiliegenden Zeichnungen ersichtlich, in denen:
- Fig. 1: eine perspektivische Ansicht einer beispielhaften Abgasleitungsanordnung zeigt,
- Fig. 2: eine vergrößerte Ansicht der Abgasleitungsanordnung der Fig. 1 zeigt,
- Fig. 3: eine Schnittansicht durch die Abgasanleitung der Fig. 2 zeigt,
- Fig. 4: eine vergrößerte Ansicht einer weiteren erfindungsgemäßen Abgasleitungsanordnung zeigt,
- Fig. 5: eine vergrößerte Ansicht einer weiteren beispielhaften Abgasleitungsanordnung zeigt,
- Fig. 6: eine perspektivische Ansicht einer erfindungsgemäßen Abgasleitungsanordnung zeigt,
- Fig. 7: einen Schnitt durch die Abgasleitungsanordnung der Fig. 6 zeigt,
- Fig. 8: eine perspektivische Ansicht einer weiteren beispielhaften Abgasleitungsanordnung zeigt,
- Fig. 9: eine Schnittansicht durch die Abgasleitungsanordnung der Fig. 8 zeigt, und
- Fig. 10: eine weitere beispielhafte Abgasleitungsanordnung zeigt.

Elemente gleicher Konstruktion oder Funktion sind figurenübergreifend mit den gleichen Bezugszeichen gekennzeichnet. Aus Gründen der Übersichtlichkeit sind gegebenenfalls nicht in allen dargestellten Figuren sämtliche Elemente und Bezugszeichen gekennzeichnet.

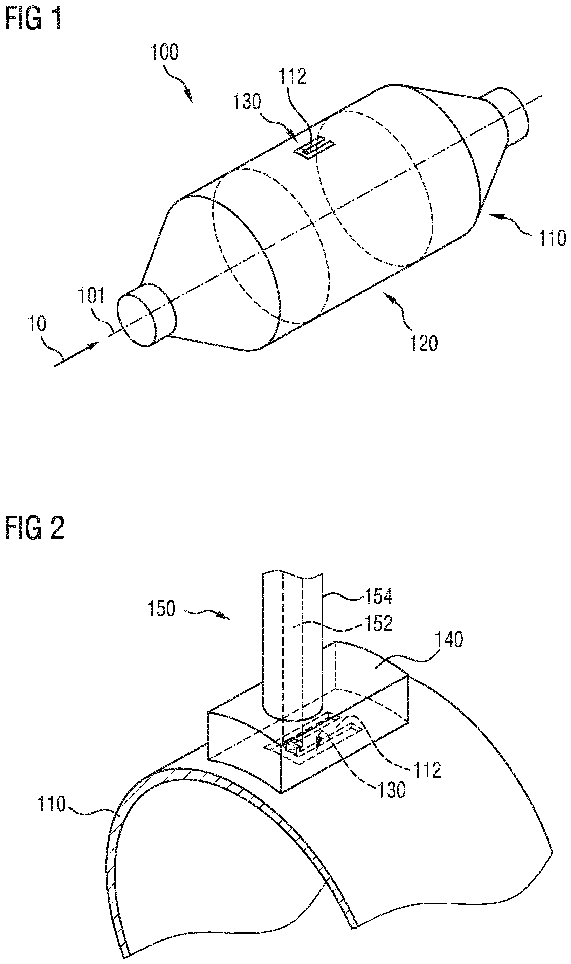

Die Fig. 1 zeigt eine beispielhafte Abgasleitungsanordnung 100, durch die Abgas einer Brennkraftmaschine (nicht dargestellt) im Wesentlichen entlang der Längsachse 101 in Richtung des Pfeils 10 strömen kann. Die Abgasleitungsanordnung 100 weist eine Abgasleitung 110 auf, die im Wesentlichen rohrförmig und zylindrisch ist. Vorzugsweise hat die Abgasleitung 110 einen kreisförmigen Querschnitt und wird durch eine Mantelwand gebildet. In der Abgasleitung 110 ist eine Abgasnachbehandlungsvorrichtung 120 angeordnet, die dazu ausgebildet ist, dass durch die Abgasleitung 110 strömende Abgas zumindest teilweise nachzubehandeln. Die Abgasnachbehandlungsvorrichtung 120 ist in der Fig. 1 durch die gestrichelten kreisförmigen Linien gekennzeichnet. Die Abgasnachbehandlungsanlage 120 ist beispielsweise eine Katalysatorvorrichtung, wie beispielsweise ein SCR-Katalysator, oder eine Filtervorrichtung, wie beispielsweise ein Dieselpartikelfilter.

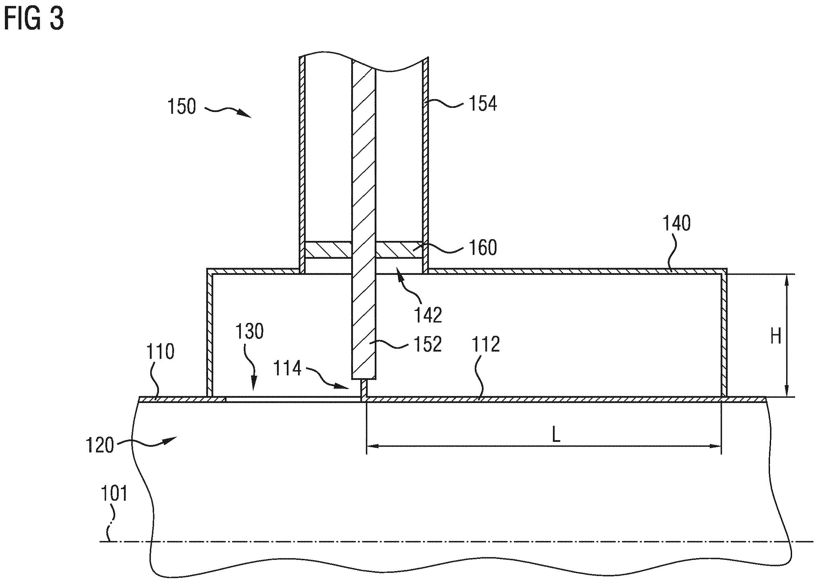

In der Fig. 1 ist gezeigt, dass in der rohrförmigen Abgasleitung 110 eine Öffnung 130 vorgesehen ist. Genauer gesagt ist die Öffnung 130 im Wesentlichen radial zur Längsachse und in der Mantelwand der Abgasleitung 110 angeordnet. Aus Gründen der Darstellbarkeit ist in der Fig. 1 ein Abschirmgehäuse 140 und ein Wellenleiter 150 nicht dargestellt, die jedoch in den Fig. 2 und 3 näher gezeigt sind.

Die in der Fig. 1 gezeigte Öffnung 130 ist im Wesentlichen U-förmig und erstreckt sich im Wesentlichen bezüglich der Längsachse 101 in axialer Richtung. Die Öffnung 130 ist beispielsweise durch Stanzen oder Prägen in die Mantelwand der Abgasleitung 110 eingebracht. In einer alternativen Ausgestaltung kann sich die im Wesentlichen U-förmige Öffnung 130 entlang einer Umfangsrichtung um die Längsachse 101 herum erstrecken. Genauer gesagt kann sich ein Koppelelement 112 (siehe Fig. 2 und 3) bezüglich der Längsachse 101 in axialer Richtung oder in Umfangsrichtung erstrecken. Die Anordnung der U-förmigen Öffnung 130 sowie des Koppelelements 112 wird in Bezug auf die Fig. 2 und 3 noch näher erläutert.

Die Fig. 2 zeigt eine Detailansicht der Abgasleitung 110 im Bereich der Öffnung 130. In der Fig. 2 ist gezeigt, dass die Abgasleitungsanordnung 100 ferner ein Abschirmgehäuse 140 aufweist, das von außen an der Abgasleitung 110 derart angebracht ist, dass es die Öffnung 130 im Wesentlichen vollständig umgibt. Das Abschirmgehäuse 140 ist beispielsweise ein im Wesentlichen quaderförmiges Gehäuse mit einer offenen Seite, wobei die offene Seite in Richtung der Abgasleitung 110 angeordnet ist. Das Abschirmgehäuse 140 ist beispielsweise mittels Schweißen, Löten oder anderweitigen Befestigungsarten starr an der Abgasleitung 110 angebracht. Beispielsweise können bezüglich der Längsachsen radial nach außen stehende Anschweißlaschen an der Abgasleitung vorgesehen werden, an denen das Abschirmgehäuse 140 angeschweißt werden kann.

In einer nicht dargestellten alternativen Ausgestaltung kann das Abschirmgehäuse 140 dadurch vorgesehen werden, dass in die zylindrische Abgasleitung 110 eine sich bezüglich der Längsachse 101 im Wesentlichen radial nach außen erstreckende Ausformung bzw. Auswölbung gebildet wird. In einer solchen Ausgestaltung ist das Abschirmgehäuse 140 integral mit der Abgasleitung 110 ausgebildet.

In der Fig. 2 ist ferner gezeigt, dass die Abgasleitungsanordnung 100 einen Wellenleiter 150 aufweist, der in der in den Fig. 2 und 3 gezeigten Ausgestaltung in der Form eines Koaxialleiters gebildet ist. Alternativ kann der Wellenleiter 150 als beispielsweise geschirmte Zweidrahtleitung, Mikrostreifenleitung, Streifenleitung oder Koplanarleitung ausgebildet sein

Der als Koaxialleiter ausgebildete Wellenleiter 150 weist folglich einen Innenleiter 152 und einen den Innenleiter 152 umgebenden Außenleiter 154 aufweist. Der Innenleiter 152 und der Außenleiter 154 sind koaxial zueinander angeordnet und dazu ausgebildet, elektromagnetische Wellen in das Abschirmgehäuse 140 derart einzukoppeln, dass die darin eingekoppelten elektromagnetischen Wellen durch die Öffnung 130 hindurch in die Abgasleitung 110 und somit in die Abgasnachbehandlungsvorrichtung 120 propergiert werden können.

Aus der Fig. 2 geht außerdem hervor, dass die Abgasleitungsanordnung 100 ein Koppelelement 112 aufweist, das in der Ausgestaltung der Fig. 1 integral mit der Abgasleitung 110 gebildet ist. Alternativ kann das Koppelelement 112 ein separates, vorzugsweise stabförmiges, Element sein, dass derart an der Abgasleitung 110 angebracht ist, dass es sich in oder über die Öffnung 130 erstreckt. Dabei befindet sich bevorzugt ein freies Ende des stabförmigen Koppelelements 112 in oder über der Öffnung 130.

Beispielweise kann die Öffnung 130 mit einem rechteckigen Querschnitt vorgesehen werden, wobei ein separates, stabförmiges Koppelelement 112 an einer Außenwand der Öffnung 130 derart angebracht wird, dass es sich, wie in der Fig. 1 gezeigt, im Wesentlichen nach innen erstreckt und folglich die Öffnung 130 in Draufsicht als U-förmige Öffnung erscheinen lässt. Alternativ kann das separate, stabförmige Koppelelement 112 in der Nähe der Öffnung 130 mit rechteckigem Querschnitt an einer Außenseite oder Innenseite der Mantelwand der Abgasleitung 110 derart befestigt sein, dass es sich, wie in der Fig. 1 gezeigt, im Wesentlichen über die Öffnung 130 erstreckt und folglich die Öffnung 130 in Draufsicht als U-förmige Öffnung erscheinen lässt.

Die Fig. 3 zeigt eine Schnittansicht durch das Abschirmgehäuse 140 und den Wellenleiter 150 entlang einer Ebene, in der sich die Längsachse 101 der Abgasleitung 110 erstreckt. Aus der Fig. 3 geht hervor, dass der Innenleiter 152 des Wellenleiters 150 mit dem Koppelelement 112 gekoppelt ist. Wie in den Fig. 2 und 3 gezeigt, ist das Koppelelement 112 an seinem freien distalen Ende in Bezug auf die Längsachse 101 zumindest teilweise radial nach außen gebogen. Das bezüglich der Längsachse radial nach außen erstreckende Ende des Koppelements 112 ist mit dem Innenleiter 152 gekoppelt, beispielsweise mittels Schweißen oder Löten. Alternativ ist das Koppelelement 112 nicht radial nach außen gebogen.

Der Außenleiter 154 des Wellenleiters 150 ist mit dem Abschirmgehäuse 140 verbunden. Beispielsweise ist dazu ein Loch 142 im Abschirmgehäuse 140 gebildet, dessen Durchmesser im Wesentlichen dem Außendurchmesser des Außenleiters 154 entspricht. In dieses Loch 142 kann dann der Außenleiter 154 zumindest teilweise eingesteckt und mit dem Abschirmgehäuse 154 verbunden werden, beispielsweise mittels Schweißen, Löten, Verstemmen oder Verschrauben. Folglich erstreckt sich auch der Innenleiter 152 des Wellenleiters 150 durch das Loch 142 ins Innere des Abschirmgehäuses 140 hinein und ist dort, wie bereits beschrieben, mit dem freien distalen Ende des Koppelelements 112 verbunden.

Der Verbindungsbereich zwischen dem Innenleiter 152 und dem Koppelelement 112 kann einen Einkoppelpunkt 114 festlegen, über den in das Innere des Abschirmgehäuses 114 mittels des Wellenleiters 150 elektromagnetische Wellen eingekoppelt werden können. Des Weiteren können diese Wellen dann in die Abgasnachbehandlungsvorrichtung 120 einkoppeln.

Das Koppelelement 112 weist vorzugsweise eine effektive Länge L auf, die sich im Wesentlichen zwischen dem Einkoppelpunkt 114 und einer Endwand des Abschirmgehäuses 140 bemisst, die sich vom Einkoppelpunkt 114 aus betrachtet in Richtung des Koppelelements 112 befindet. Die effektive Länge L des Koppelelements 112 entspricht ungefähr einem Viertel der relevanten Wellenlänge der eingekoppelten elektromagnetischen Wellen, wobei es bevorzugt ist, wenn die effektive Länge L des Koppelelements 112 etwas kleiner ist als ein Viertel der relevanten Wellenlänge der eingekoppelten elektromagnetischen Wellen. In einer beispielhaften Ausgestaltung liegt die effektive Länge L in einem Bereich zwischen ungefähr 5 cm und ungefähr 8 cm.

Das Abschirmgehäuse 140 weist ferner eine Höhe H auf, die sich bezüglich der Längsachse 101 in radialer Richtung erstreckt. Vorzugsweise liegt die Höhe H in einem Bereich zwischen ungefähr 5 mm und ungefähr 20 mm liegt.

Um das Innere des Abschirmgehäuses 140 zumindest teilweise vor einer Verschmutzung durch das Abgas zu schützen, kann die Öffnung 130 zumindest teilweise von einem Schutzelement (nicht gezeigt) bedeckt sein, das dazu ausgebildet ist, für elektromagnetische Wellen durchlässig und für Abgaspartikel undurchlässig zu sein. Beispielsweise umfasst das Schutzelement eine aus Glimmer gebildete Schutzfolie, die an der Abgasleitung 110 und/oder dem Koppelelement 112 angebracht ist und die Öffnung 130 zumindest teilweise bedeckt.

Die Abgasleitungsanordnung 100 der Fig. 1 bis 3 weist ferner ein dielektrisches Abdichtelement 160 auf, das dazu ausgebildet ist, den Bereich zwischen Innenleiter 152 und Außenleiter 154 thermisch gegenüber dem Inneren des Abschirmgehäuses 140 abzuschirmen. Außerdem kann das Abdichtelemente 160 dazu ausgebildet sein, die gesamte Struktur zumindest teilweise zu stabilisieren und zumindest teilweise ein Eindringen von Schmutzpartikeln in den Wellenleiter zu verhindern.

Das vollständig um die Öffnung 130 angeordnete Abschirmgehäuse 140 gewährleistet eine Dichtheit gegenüber der hochfrequenten elektromagnetischen Wellen und dient dazu, dass die elektromagnetischen Wellen, die mittels des Koaxialleiters 150 in das Abschirmgehäuse eingebracht werden, im Wesentlichen vollständig in die Abgasleitung 110 und die Abgasnachbehandlungsvorrichtung 120 propagiert werden und nicht radial nach außen wegstrahlen.

Durch geeignete Auswertung der elektromagnetischen Reflexionswellen kann auf eine Beladung der Abgasnachbehandlungsvorrichtung 120 geschlossen werden. Die Auswertung erfolgt beispielsweise bei einem SCR-Katalysator dadurch, dass sich die elektrische Dielelektrizitätszahl des SCR-Katalysators je nach Beladungszustand ändert und somit auch das Resonanzverhalten der Anordnung. Das ermittelte Resonanzverhalten kann beispielsweise zum Bestimmung der Beladung des SCR-Katalysators ausgewertet werden.

Bei alternativen beispielhaften Auswerteverfahren können die Amplituden und/oder Gütefaktoren ausgewertet werden. Ferner sind klassische mathematische und/oder statistische Verfahren anwendbar, wie z. B. Mittelung, Schwerpunkt, Interpolation, Fit-Funktionen und dergleichen.

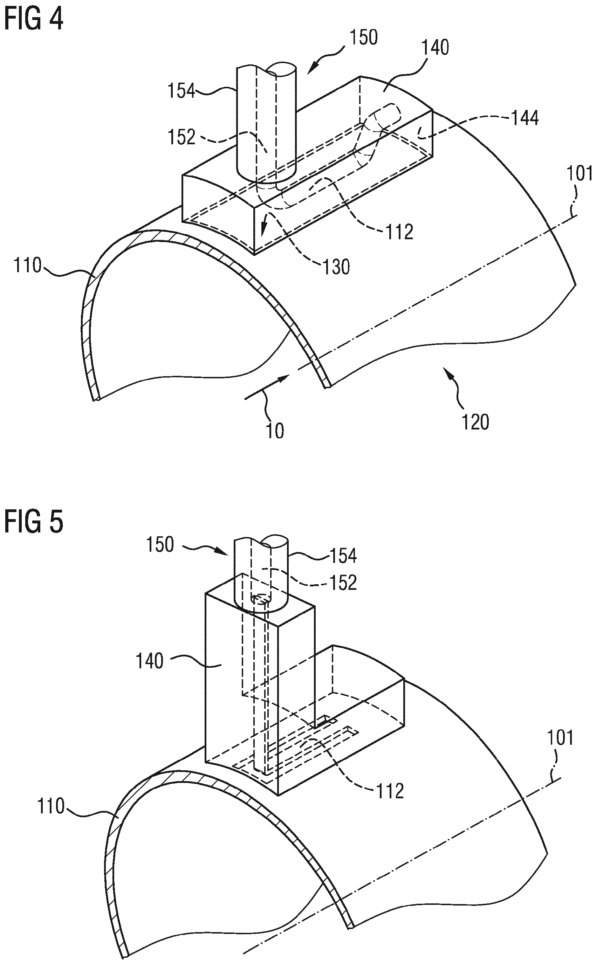

Die Fig. 4 und 5 zeigen weitere Ausgestaltungen von Abgasleitungsanordnungen 100.

In der Fig. 4 ist dargestellt, dass das Koppelelement 112 mit dem Innenleiter 152 des als Koaxialleiters ausgebildeten Wellenleiters 150 integral ausgebildet sein. Somit wird der Innenleiter 152 derart bereitgestellt, dass sich dieser ins Innere des Abschirmgehäuses 140 erstreckt und im Bereich der Öffnung 130 derart umgelenkt ist, dass sich dieser zumindest teilweise in und/oder über der Öffnung 130 erstreckt. Der Innenleiter 152 kann dann an der Abgasleitung 110 an einem Ende der Öffnung 130, z. B. an dem Stirnseitigen Ende der Abgasleitung 110, wo die Öffnung 130 beginnt, d. h. unterhalb einer Seitenwand 144 des Abschirmgehäuses, befestigt sein, beispielsweise mittels Schweißen, Löten, Verstemmen oder Einschrauben. Alternativ kann, wie in der Fig. 4 gezeigt, der derartig ausgebildete Innenleiter 152 an der Seitenwand 144 des Abschirmgehäuses 140 befestigt sein, beispielsweise mittels Schweißen, Löten, Verstemmen oder Einschrauben.

Die Fig. 5 zeigt eine beispielhafte Ausgestaltung, bei der der Außenleiter 154 des Wellenleiters 150 zumindest teilweise mit dem Abschirmgehäuse 140 integral ausgebildet ist. In einer solchen Ausgestaltung kann beispielsweise ein als Koaxialkabel ausgebildeter weiterer Wellenleiter 150 mit dem radial äußeren Ende des Abschirmgehäuses 140 gekoppelt werden, wobei das Koppelelement 112, das zusätzlich abschnittsweise als Innenleiter fungiert, mit dem Innenleiter des weiteren Wellenleiters verbunden ist. In der Fig. 5 bildet somit der sich bezüglich der Längsachse 101 radial nach außen erstreckende Bereich zumindest teilweise einen Teil des Wellenleiters 150, insbesondere zumindest einen Teil des Außenleiters 154. Der Innenleiter 152 kann dabei wiederum mit dem bezüglich der Längsachse 101 radial nach außen gebogenen Koppelelement 112 verbunden sein oder sich, wie in der Fig. 4 gezeigt, ganzheitlich zu der Seiten 144 des Abschirmgehäuses 140 erstrecken.

Es ist selbstredend, dass die Ausgestaltungen der Fig. 1 bis 5 miteinander beliebig kombiniert werden. So ist es ebenfalls erfindungsgemäß, dass der Wellenleiter 150 und das Abschirmgehäuse 140 als Kombination der in den Fig. 4 und 5 gezeigten Ausgestaltungen ausgebildet sein kann.

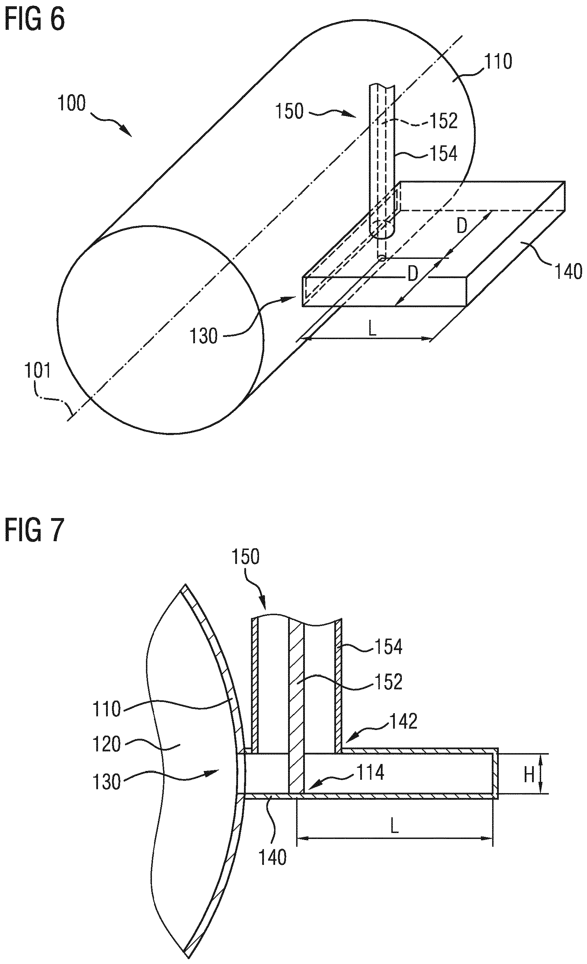

Im Folgenden wird Bezug genommen auf die Fig. 6 bis 9, aus denen weitere Ausgestaltungen der Abgasleitungsanordnung 100 hervorgehen.

Die Fig. 6 zeigt dabei eine perspektivische Ansicht auf eine weitere erfindungsgemäße Abgasleitungsanordnung 100, in der eine schlitzförmige Öffnung 130 vorgesehen ist. Das Abschirmgehäuse 140 der in den Fig. 6 und 7 gezeigten Ausgestaltung umgibt wiederum die Öffnung 130 m Wesentlichen vollständig und erstreckt sich bezüglich der Längsachse 101 von der Mantelwand der Abgasleitung 110 radial nach außen. Der Wellenleiter 150, der in den in den Fig. 6 bis 9 gezeigten Ausgestaltungen wieder beispielhaft als Koaxialleiter dargestellt ist, erstreckt sich wiederum von außen in das Abschirmgehäuse 140. Der Innenleiter 152 ist dabei mit einer Seitenwand des Gehäuses 140 gekoppelt, beispielsweise mittels Schweißen, Löten, Verstemmen oder Verschrauben, und der Außenleiter 154 ist wiederum zumindest teilweise in ein Loch 142 (siehe Fig. 7) im Abschirmgehäuse 140 eingesteckt und mit diesem gekoppelt, beispielsweise mittels Schweißen, Löten, Verstemmen oder Verschrauben.

Der Innenleiter 152 ist vorzugsweise, aber nicht notwendigerweise, in unmittelbarer Nähe der schlitzförmigen Öffnung 130 an einer Seitenwand des Abschirmgehäuses 140 gekoppelt und kann an dieser Stelle den Einkoppelpunkt 114 festlegen. Dabei ist es bevorzugt, wenn der Einkoppelpunkt 114 in einem zentralen Bereich der schlitzförmigen Öffnung 130 angeordnet ist, so dass ein Abstand D des Einkoppelpunkts 114 zu einer Seitenwand des Abschirmgehäuses 140 in einer ersten Richtung entlang schlitzförmigen Öffnung 130 gleich einem Abstand D zu einer gegenüberliegenden Seitenwand des Abschirmgehäuses 140 in einer zweiten Richtung entgegengesetzt zur ersten Richtung entlang der schlitzförmigen Öffnung 130 gleich ist. Vorzugsweise entspricht der Abstand D ungefähr der Hälfte der Länge der schlitzförmigen Öffnung 130. Beispielsweise entspricht der Abstand D ungefähr einem Viertel der relevanten Wellenlänge. Dementsprechend ist die axiale Ausdehnung der schlitzförmigen Öffnung 130 (bzw. die Länge der schlitzförmigen Öffnung 130) im Wesentlichen derart ausgebildet, dass diese ungefähr der Hälfte der relevanten Wellenlänge entspricht. Damit kann bewerkstelligt werden, dass die in das Abschirmgehäuse 140 eingekoppelten elektromagnetische Wellen ausreichen Raum zur Verfügung haben und folglich durch den die schlitzförmige Öffnung 130 in die Abgasleitung 110 und somit in die Abgasnachbehandlungsvorrichtung 120 propagiert werden können.

Die Fig. 7 zeigt einen Ausschnitt einer Schnittansicht durch eine Ebene, die durch das Abschirmgehäuse 140 und den Wellenleiter 150 und senkrecht zur Längsachse 101. Aus der Fig. 7 ist ersichtlich, dass der Innenleiter 152 am Inneren einer Seitenwand des Abschirmgehäuses 140 befestigt ist und der Außenleiter 154 an einer dieser Seitenwand gegenüberliegenden Seitenwand des Abschirmgehäuses 140 befestigt ist.

Die Verbindungsstelle zwischen dem Innenleiter 152 und dem Abschirmgehäuse 140 kann wiederum als Einkoppelpunkt 114 bezeichnet werden, der dazu ausgebildet ist, die vom Wellenleiter 150 geleiteten elektromagnetischen Wellen in das Abschirmgehäuse 140 einzukoppeln. Der Einkoppelpunkt 112 ist von einem bezüglich der Längsachse radial äußeren Ende des Abschirmgehäuses 140 mit dem effektiven Abstand L beabstandet, der vorzugsweise ungefähr einem Viertel der relevanten Wellenlänge der eingekoppelten elektromagnetischen Wellen entspricht. Der effektive Abstand L ist vergleichbar mit der effektiven Länge L des Koppelelements 112 der Fig. 1 bis 3 und entspricht ungefähr einem Viertel der relevanten Wellenlänge der eingekoppelten elektromagnetischen Wellen. In einer beispielhaften Ausgestaltung liegt der effektive Abstand L in einem Bereich zwischen ungefähr 25 cm und ungefähr 8 cm. Die Höhe H des Abschirmgehäuses 140 ist vorzugsweise wiederum kleinstmöglich und bewegt sich im Bereich zwischen ungefähr 5 mm und ungefähr 20 mm.

Die Abmessung des Abschirmgehäuses 140 in radialer Richtung kann in anderen Ausführungsformen signifikant grösser sein als ein Viertel der relevanten Wellenlänge. Dadurch kann eine effektive Wärmeentkopplung von der Abgasleitung 110 erzielt werden.

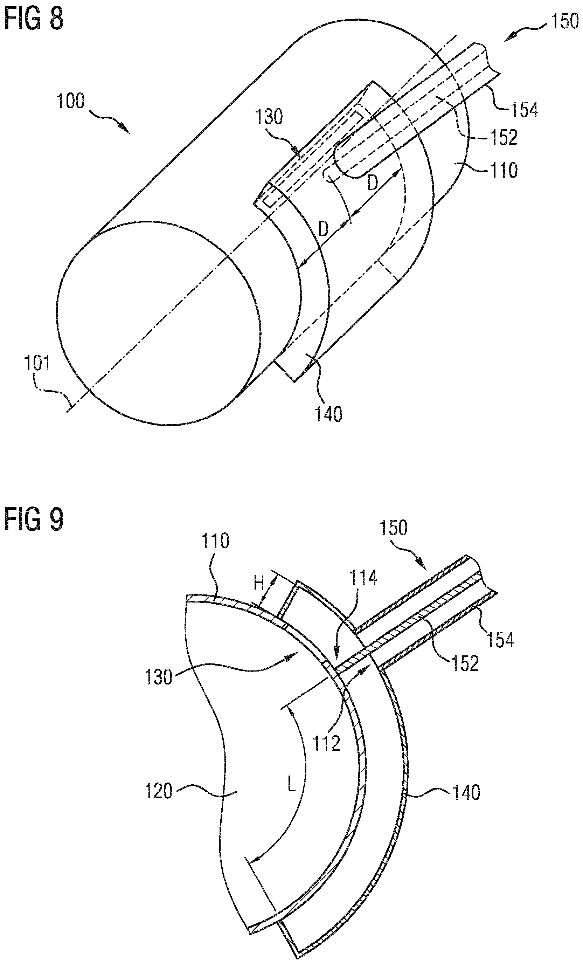

Die Fig. 8 und 9 zeigen eine Weiterbildung der in den Fig. 6 und 7 gezeigten beispielhaften Abgasleitungsanordnung 100, wobei das Abschirmgehäuse 140 bezüglich der Längsachse 101 zumindest teilweise in Umfangsrichtung verläuft. Die Fig. 8 zeigt dabei eine perspektivische Ansicht der weiteren beispielhaften Abgasleitungsanordnung 100, bei der ebenfalls wiederum eine schlitzförmige Öffnung 130 vorgesehen ist, die vollständig von dem Abschirmgehäuse 140, das an der Abgasleitung 110 von außen angebracht, umgeben ist. Das Abschirmgehäuse 140 weist dabei eine gekrümmte Gestalt auf, die im Wesentlichen der Krümmung der Abgasleitung entspricht.

Der Einkoppelpunkt 114, das heißt die Verbindungsstelle zwischen dem Innenleiter 152 des Wellenleiters 150 und der Abgasleitung 110, ist wiederum vorzugsweise wieder in unmittelbarer Nähe zur schlitzartigen Öffnung 130 angeordnet und weist einen Abstand L zu einem der schlitzförmigen Öffnung 140 in Umfangsrichtung gegenüberliegenden Seitenwand des Abschirmgehäuses 140 auf, der in vorteilhafterweise ungefähr einem Viertel der relevanten Wellenlänge entspricht. Der beispielhaft als Koaxialleiter ausgebildete Wellenleiter 150 der Fig. 8 und 9 ist ähnlich ausgebildet wie der Wellenleiter 150 der Fig. 6 und 7, wobei der Außenleiter 154 zwar wiederum mit dem Abschirmgehäuse 140 gekoppelt ist, beispielsweise mittels Schweißen, Löten, Verstemmen oder Verschrauben, jedoch der Innenleiter 152 zum Bilden des Einkoppelpunkts 114 mit der Abgasleitung 110 gekoppelt ist, beispielsweise mittels Schweißen, Löten, Verstemmen oder Verschrauben.

Die Höhe H des Abschirmgehäuses 140 ist vorzugsweise wiederum kleinstmöglich und bewegt sich im Bereich zwischen ungefähr 5 mm und ungefähr 20 mm.

Durch die Anregung mittels des Wellenleiter 150 wird im Abschirmgehäuse 140 unter anderem ein ausbreitungsfähiges E-Feld erzeugt, welches in der Öffnung 130 ein senkrecht zu dessen Längsrichtung stehende Ausrichtung aufweist. Dieses E-Feld kann in die Abgasnachbehandlungsvorrichtung 120 eindringen und dort beispielsweise eine transversal elektrische Hohlleitermode anregen und gegebenenfalls auch empfangen.

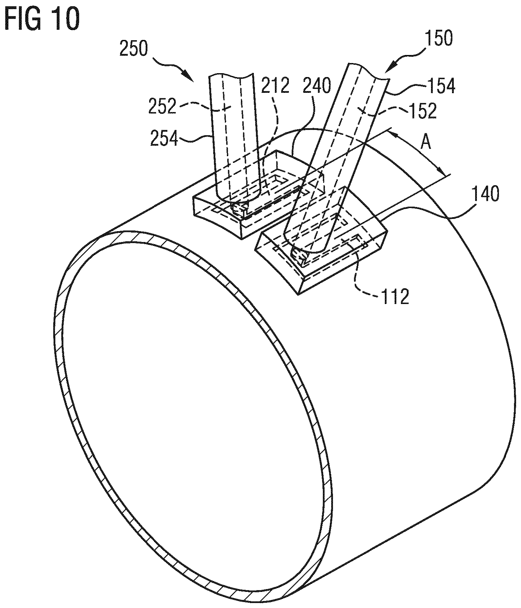

Die Fig. 10 zeigt eine weitere beispielhafte Abgasleitung 100, die im Wesentlichen der Ausgestaltung der Fig. 1 bis 3 entspricht. Die Abgasleitungsanordnung 100 der Fig. 10 unterscheidet sich von der Abgasleitungsanordnung der Fig. 1 bis 3 dahingehend, dass anstelle von einer Einkoppelvorrichtung, die eine Öffnung 130 in der Abgasleitung 110, ein Abschirmgehäuse 140 und einen Wellenleiter 150 aufweist, zumindest eine weitere Einkoppelvorrichtung, die eine Öffnung 230 in der Abgasleitung 110, ein Abschirmgehäuse 240 und einen Wellenleiter 250 aufweist, an der Abgasleitung 110 vorgesehen werden können. Dabei sei festgehalten, dass die Ausgestaltungen der Öffnung 130, 230, des Abschirmgehäuses 140, 240 und der Wellenleiter 150, 250 jeweils zumindest ähnlich sein können. Vorzugsweise sind diese Elemente jeweils identisch, wobei die beiden bezüglich der Längsachse 101 in Umfangsrichtung unter einem Abstand A voneinander beabstandet sind. Diese können aber in Abstand und Orientierung auch so ausgestaltet sein, dass ein gewünschtes Transmissions- oder Reflexionsverhalten eingestellt wird

Durch das Vorsehen eines vorbestimmten Abstandes A kann eine Dämpfungseinstellung erzielt werden. Die beiden Einkoppelvorrichtungen können beispielsweise dazu ausgebildet sein, eine redundante Überwachung der Abgasnachbehandlungsanlage 120 bereitzustellen. Alternativ oder zusätzlich kann durch das Vorsehen von zumindest zwei Einkoppelvorrichtung eine Überwachung der Abgasnachbehandlungsanlage mittels Transmission der eingekoppelten elektromagnetischen Wellen erfolgen, wobei eine der beiden Einkoppelvorrichtungen als Sender dient und die andere Einkoppelvorrichtung als Empfänger dient. Die vom Sender in die Abgasleitung 110 eingekoppelten elektromagnetischen Wellen breiten sich im Inneren davon aus und werden im Falle eines Dieselpartikelfilters auf ihrem Weg zur anderen Einkoppelvorrichtung in ihrer Amplitude gedämpft. Diese Dämpfung kann beispielsweise als Maß für den Beladungszustand des Dieselpartikelfilters genutzt werden.

An dieser Stelle ist festzuhalten, dass auch Ausgestaltungen der Fig. 6 bis 9 gemäß der Fig. 10 mit mehreren Einkoppelvorrichtungen ausgebildet sein können. Ferner können jede der hierin beschriebenen Koppelstrukturen beliebig mit anderen, z. B. auch bekannten, Koppelstrukturen kombiniert werden. Dabei können die Ausrichtungen der jeweiligen Koppelstrukturen wie gewünscht angepasst werden, damit das Reflexions- und/oder Transmissionsverhalten bestimmt werden kann.

Bei den in den Fig. 1 bis 10 gezeigten Ausgestaltungen erfolgt zunächst eine Einkopplung von elektromagnetische Wellen in ein direkt an der Abgasleitung 110 angebrachtes Abschirmgehäuse 140, von dort aus die elektromagnetischen Wellen direkt über die Öffnung 130 in die Abgasleitung 110 und die Abgasnachbehandlungsanlage 120 propagiert werden. Alternativ dazu kann das Abschirmgehäuse 140 von der Abgasleitung 110 beabstandet sein und eine geschlossene Struktur aufweisen, in der eine der Öffnung 130 ähnliche Öffnung vorgesehen ist. Zwischen der Öffnung in dem von der Abgasleitung beabstandeten Abschirmgehäuse 140 und der Öffnung 130 in der Abgasleitung 100 kann dabei ein weiterer Wellenleiter angeordnet sein, der dazu ausgebildet ist, die in das Abschirmgehäuse 140 eingekoppelten elektromagnetischen Wellen in die Abgasleitung 110 und die Abgasnachbehandlungsanlage 120 zu leiten.

## Patentansprüche

1. Abgasleitungsanordnung (100) für eine Brennkraftmaschine, wobei die Abgasleitungsanordnung (100) aufweist:
- eine sich im Wesentlichen entlang einer Längsachse (101) erstreckende Abgasleitung (110), die dazu ausgebildet ist, Abgas der Brennkraftmaschine zumindest teilweise zu leiten,
- eine in der Abgasleitung (110) vorgesehene Öffnung (130), die im Wesentlichen radial zur Längsachse (101) angeordnet ist,
- ein Abschirmgehäuse (140) und
- einen Wellenleiter (150), der mit dem Abschirmgehäuse (140) und/oder mit der Abgasleitung (110) gekoppelt und dazu ausgebildet ist, elektromagnetische Wellen derart in das Abschirmgehäuse (140) einzukoppeln, dass die elektromagnetischen Wellen durch die Öffnung (130) in die Abgasleitung (110) propagiert werden, 11 **dadurch gekennzeichnet, dass**
- das Abschirmgehäuse (140) mit der Abgasleitung (110) als eine sich bezüglich der Längsachse (101) im Wesentlichen radial nach außen erstreckende Ausformung bzw. Auswölbung integral derart gebildet ist, dass es die Öffnung (130) im Wesentlichen vollständig umgibt.

2. Abgasleitungsanordnung (100) nach Anspruch 1, ferner mit einer in der Abgasleitung (110) angeordneten Abgasnachbehandlungsvorrichtung (120), die dazu ausgebildet ist, das durch die Abgasleitung (110) strömende Abgas zumindest teilweise nachzubehandeln,
wobei die Öffnung (130) im Bereich der Abgasnachbehandlungsvorrichtung (120) derart vorgesehen ist, dass die vom Wellenleiter (150) in das Abschirmgehäuse (140) eingekoppelten elektromagnetischen Wellen durch die Öffnung (130) direkt in die Abgasnachbehandlungsvorrichtung (120) propagiert werden.

3. Abgasleitungsanordnung (100) nach einem der vorhergehenden Ansprüche, wobei die Öffnung eine schlitzförmige Öffnung (130) ist, die sich im Wesentlichen parallel zur Längsachse (101) oder bezüglich der Längsachse (101) in Umfangsrichtung erstreckt.

4. Abgasleitungsanordnung (100) nach Anspruch 3, wobei die schlitzförmige Öffnung (140) eine Länge aufweist, die ungefähr einem Viertel bis ungefähr der Hälfte der relevanten Wellenlänge der eingekoppelten elektromagnetischen Wellen entspricht.

5. Abgasleitungsanordnung (100) nach einem der vorhergehenden Ansprüche, wobei das Abschirmgehäuse (140) eine bezüglich der Längsachse (101) radiale Ausdehnung aufweist, die ungefähr einem Viertel bis ungefähr der Hälfte der relevanten Wellenlänge entspricht.

6. Abgasleitungsanordnung (100) nach einem der vorhergehenden Ansprüche,
wobei das Abschirmgehäuse (140) eine sich bezüglich der Längsachse (101) in axialer Richtung erstreckende Ausdehnung aufweist, die ungefähr der Hälfte der relevanten Wellenlänge entspricht und/oder
wobei das Abschirmgehäuse (140) eine sich bezüglich der Längsachse (101) in Umfangsrichtung erstreckende Ausdehnung aufweist, die ungefähr einem Viertel der relevanten Wellenlänge entspricht.

7. Abgasleitungsanordnung (100) nach einem der vorhergehenden Ansprüche, wobei der Wellenleiter ein Koaxialleiter (150) ist, der einen Innenleiter (152), der mit Abschirmgehäuse (140) oder der Abgasleitung (110) gekoppelt ist, und einen den Innenleiter (152) koaxial umgebenden Außenleiter (154) aufweist, der mit dem Abschirmgehäuse (140) gekoppelt ist..

8. Abgasleitungsanordnung (100) nach Anspruch 7, wobei der Innenleiter (152) mit einer Innenwand des Abschirmgehäuses (140) in unmittelbarer Umgebung der Öffnung (130) gekoppelt ist.

9. Abgasleitungsanordnung (100) nach einem der Ansprüche 7 und 8, wobei das Abschirmgehäuse (140) ein Loch (142) aufweist, in das der Außenleiter (154) zumindest teilweise eingesteckt ist und an dem der Außenleiter (154) mit dem Abschirmgehäuse gekoppelt ist.

## Claims

1. Exhaust pipe arrangement (100) for an internal combustion engine, wherein the exhaust pipe arrangement (100) has:
- an exhaust pipe (110) which extends substantially along a longitudinal axis (101) and which is designed for at least partially conducting exhaust gas of the internal combustion engine,
- an opening (130) which is provided in the exhaust pipe (110) and which is arranged substantially radially with respect to the longitudinal axis (101),
- a shielding housing (140), and
- a waveguide (150) which is coupled to the shielding housing (140) and/or to the exhaust pipe (110) and which is designed to couple electromagnetic waves into the shielding housing (140) such that the electromagnetic waves are propagated through the opening (130) into the exhaust pipe (110),
**characterized in that**
- the shielding housing (140) is formed integrally with the exhaust pipe (110), as a formation or protuberance which extends substantially radially outwards in relation to the longitudinal axis (101), so as to substantially completely surround the opening (130).

2. Exhaust pipe arrangement (100) according to Claim 1, furthermore having an exhaust-gas aftertreatment device (120) which is arranged in the exhaust pipe (110) and which is designed to perform at least partial aftertreatment of the exhaust gas flowing through the exhaust pipe (110),
wherein the opening (130) is provided in the region of the exhaust-gas aftertreatment device (120) such that the electromagnetic waves that are coupled into the shielding housing (140) by the waveguide (150) are propagated through the opening (130) directly into the exhaust-gas aftertreatment device (120).

3. Exhaust pipe arrangement (100) according to any of the preceding claims, wherein the opening is a slot-shaped opening (130) which extends substantially parallel to the longitudinal axis (101) or in a circumferential direction with respect to the longitudinal axis (101).

4. Exhaust pipe arrangement (100) according to Claim 3, wherein the slot-shaped opening (140) has a length which corresponds to approximately one quarter to approximately one half of the relevant wavelength of the coupled-in electromagnetic waves.

5. Exhaust pipe arrangement (100) according to any of the preceding claims, wherein the shielding housing (140) has a radial extent with respect to the longitudinal axis (101) which corresponds to approximately one quarter to approximately one half of the relevant wavelength.

6. Exhaust pipe arrangement (100) according to any of the preceding claims,
wherein the shielding housing (140) has an extent, extending in an axial direction with respect the longitudinal axis (101), which corresponds to approximately one half of the relevant wavelength, and/or
wherein the shielding housing (140) has an extent, extending in a circumferential direction with respect the longitudinal axis (101), which corresponds to approximately one quarter of the relevant wavelength.

7. Exhaust pipe arrangement (100) according to any of the preceding claims, wherein the waveguide is a coaxial guide (150) which has an inner guide (152), which is coupled to the shielding housing (140) or to the exhaust pipe (110), and an outer guide (154), which coaxially surrounds the inner guide (152) and which is coupled to the shielding housing (140).

8. Exhaust pipe arrangement (100) according to Claim 7, wherein the inner guide (152) is coupled to an inner wall of the shielding housing (140) in the immediate vicinity of the opening (130).

9. Exhaust pipe arrangement (100) according to either of Claims 7 and 8, wherein the shielding housing (140) has a hole (142) into which the outer conductor (154) is at least partially inserted and at which the outer conductor (154) is coupled to the shielding housing.

## Revendications

1. Ensemble formant conduite de gaz d'échappement (100) destiné à un moteur à combustion interne, l'ensemble formant conduite de gaz d'échappement (100) comportant :
- une conduite de gaz d'échappement (110) qui s'étend sensiblement le long d'un axe longitudinal (101) et qui est conçu pour conduire au moins partiellement les gaz d'échappement du moteur à combustion interne,
- une ouverture (130) qui est ménagée dans la conduite de gaz d'échappement (110) et qui est disposée sensiblement radialement par rapport à l'axe longitudinal (101),
- un boîtier de blindage (140)
et
- un guide d'ondes (150) qui est couplé au boîtier de blindage (140) et/ou à la conduite de gaz d'échappement (110) et qui est conçu pour injecter par couplage des ondes électromagnétiques dans le boîtier de blindage (140) de telle sorte que les ondes électromagnétiques se propagent à travers l'ouverture (130) jusque dans la conduite de gaz d'échappement (110),
**caractérisé en ce que**
- le boîtier de blindage (140) est formé d'un seul tenant avec la conduite de gaz d'échappement (110) sous la forme d'une saillie ou d'un renflement s'étendant sensiblement radialement vers l'extérieur par rapport à l'axe longitudinal (101) de façon à entourer sensiblement complètement l'ouverture (130).

2. Ensemble formant conduite de gaz d'échappement (100) selon la revendication 1, comprenant en outre un dispositif de post-traitement de gaz d'échappement (120) qui est disposé dans la conduite de gaz d'échappement (110) et qui est conçu pour effectuer un post-traitement au moins partiel sur les gaz d'échappement s'écoulant à travers la conduite de gaz d'échappement (110),
l'ouverture (130) étant ménagée dans la zone du dispositif de post-traitement de gaz d'échappement (120) de telle sorte que les ondes électromagnétiques, injectées par couplage par le guide d'ondes (150) dans le boîtier de blindage (140), se propagent à travers l'ouverture (130) directement jusque dans le dispositif de post-traitement de gaz d'échappement (120).

3. Ensemble formant conduite de gaz d'échappement (100) selon l'une des revendications précédentes, l'ouverture étant une ouverture (130) en forme de fente qui s'étend sensiblement parallèlement à l'axe longitudinal (101) ou dans la direction circonférentielle par rapport à l'axe longitudinal (101).

4. Ensemble formant conduite de gaz d'échappement (100) selon la revendication 3, l'ouverture (140) en forme de fente ayant une longueur qui est comprise entre environ un quart et environ la moitié de la longueur d'onde concernée des ondes électromagnétiques injectées par couplage.

5. Ensemble formant conduite de gaz d'échappement (100) selon l'une des revendications précédentes, le boîtier de blindage (140) comportant, par rapport à l'axe longitudinal (101), une extension radiale qui est comprise entre environ un quart et environ la moitié de la longueur d'onde concernée.

6. Ensemble formant conduite de gaz d'échappement (100) selon l'une des revendications précédentes,
le boîtier de blindage (140) comportant une extension qui s'étend dans la direction axiale par rapport à l'axe longitudinal (101) et qui correspond environ à la moitié de la longueur d'onde concernée et/ou
le boîtier de blindage (140) comportant une extension qui s'étend dans la direction circonférentielle par rapport à l'axe longitudinal (101) et qui correspond environ à un quart de la longueur d'onde concernée.

7. Ensemble formant conduite de gaz d'échappement (100) selon l'une des revendications précédentes, le guide d'ondes étant un conducteur coaxial (150) qui comporte un conducteur intérieur (152), qui est couplé au boîtier de blindage (140) ou à la conduite de gaz d'échappement (110), et un conducteur extérieur (154) qui entoure coaxialement le conducteur intérieur (152) et qui est couplé au boîtier de blindage (140).

8. Ensemble formant conduite de gaz d'échappement (100) selon la revendication 7, le conducteur intérieur (152) étant couplé à une paroi intérieure du boîtier de blindage (140) au voisinage immédiat de l'ouverture (130).

9. Ensemble formant conduite de gaz d'échappement (100) selon l'une des revendications 7 et 8, le boîtier de blindage (140) comportant un trou (142) dans lequel le conducteur extérieur (154) est inséré au moins partiellement et au niveau duquel le conducteur (154) est couplé au boîtier de blindage.
